Europäisches Patentamt

European Patent Office

Office européen des brevets

(11) Veröffentlichungsnummer: **0 391 130**
**A1**

## (12) EUROPÄISCHE PATENTANMELDUNG

(21) Anmeldenummer: **90105291.0**

(22) Anmeldetag: **21.03.90**

(51) Int. Cl.⁵: **G05D 19/00, B25J 13/00**

(30) Priorität: **07.04.89 DE 3911341**

(43) Veröffentlichungstag der Anmeldung:
**10.10.90 Patentblatt 90/41**

(84) Benannte Vertragsstaaten:
**DE FR GB IT SE**

(71) Anmelder: **Wild Leitz GmbH**
**Ernst-Leitz-Strasse 30 Postfach 20 20**
**D-6330 Wetzlar 1(DE)**

(72) Erfinder: **Schalz, Karl-Josef, Dr.**
**Zewenaarsstrasse 3**
**D-6290 Weilburg(DE)**

(54) **Einrichtung zur aktiven Schwingungsdämpfung.**

(57) Einrichtung zur aktiven Schwingungsdämpfung eines Objekts mit einem Schwingungssensor (6), einem Regelkreis (8) und einem Aktuator (10), also ein aktiver Tilger (6,8,10), bei dem das Objekt ein Balken (1) mit zwei freien Enden (3,4) ist, und der Schwingungssensor (6) nahe dem ersten Balkenende (3) und der Aktuator (10) nahe dem zweiten Balkenende (4) angeordnet ist.

Eine vorteilhafte Anwendung findet die Einrichtung bei Balken variabler Länge. Eine Präzisions-Koordinaten-Meßmaschine mit derartigem aktivem Tilger und Schwingungssensor an der Pinole ist ein bevorzugtes Anwendungsbeispiel.

Fig.1

## Einrichtung zur aktiven Schwingungsdämpfung

Die Erfindung betrifft eine Einrichtung zur aktiven Schwingungsdämpfung eines Objekts mit einem Schwingungssensor, einem Regelkreis und einem Aktuator.

Derartige Einrichtungen sind auch als "aktive Tilger" in der Robotertechnik bekannt. Dort wird die Schwingung des freien Endes eines Balkens, der in einem Drehgelenk an seinem anderen Ende gelagert ist und der durch einen Antrieb auf eine Soll-Winkelposition zu diesem Gelenk gebracht werden soll, gedämpft. Außer der Regelung dieses Antriebs mit verschiedenen Sensoranordnungen wird auch am freien Balkenende ein Sensor und ein Aktuator vereinigt. Als Aktuatoren sind z.B. steuerbare elekromagnetische Linearantriebe mit bewegten trägen Massen bekannt. Dies ist beispielsweise in H.-B. Kuntze, Position control of Industrial Robots-Impacts, Concepts and Results, Symposion Robot Control 5.-7.10.88 Karlsruhe, insbesondere Fig. 9, beschrieben.

Bei Präzisions-Meßmaschinen unterliegen die Genauigkeit, die Schnelligkeit und der erfaßbare Meßbereich der Messungen steigenden Anforderungen. Zur Steigerung der Genauigkeit sind Schwingungen zu unterdrücken, was in der Regel steife Konstruktionen mit großen Massen erfordert. Steife Konstruktionen großer Masse behindern jedoch schnelles Verfahren. Ein großer Meßbereich erfordert große Baulängen und Verfahrwege, so daß möglichst große Beschleunigungen und Fahrgeschwindigkeiten angestrebt werden, wodurch die Anforderungen an Schwingungsteifigkeit und Leichtbau erhöht werden. Ein kritisches Bauteil ist dabei die Pinole, die in jede Richtung beschleunigt wird, und deren freie Länge sich stark ändern muß, um einen großen Meßbereich zu erreichen. Ihre Biegeschwingungen sind daher erheblich, wegen der variablen Längen sind jedoch herkömmliche Dämpfungsmaßnahmen beeinträchtigt.

Der Anordnung eines aktiven Tilgers mit vereinigter Anordnung von Sensor und Aktuator steht entgegen, daß dann am Pinolenende die Einrichtung mit nicht unbeträchtlicher Masse und Baugröße stört. Auch ist dann die Wirkung des Aktuators von der freien Länge der Pinole abhängig.

Es ist Aufgabe der Erfindung, eine gattungsgemäße Einrichtung zur aktiven Schwingungsdämpfung anzugeben, die besonders zur Schwingungsdämpfung von Balken veränderlicher Länge ausgebildet ist.

Es ist eine weitere Aufgabe der Erfindung, die Schwingungsdämpfung der z-Pinole einer Präzisions-Meßmaschine zu verbessern.

Die Lösung wird bei einer gattungsgemäßen Einrichtung durch die kennzeichnenden Merkmale des Anspruchs 1 erreicht. Anspruch 2 gibt eine vorteilhafte Weiterbildung an. Für eine Präzisions-Meßmaschine wird die Lösung durch die kennzeichnenden Merkmale des Anpruchs 3 erreicht. Vorteilhafte Ausführungen und Weiterbildungen sind Gegenstand der Unteransprüche 4 und 5.

Die Erfindung wird anhand der Zeichnung näher erklärt. Diese zeigt in

Fig. 1 eine Prinzipdarstellung eines Balkens mit einer Einrichtung zur aktiven Schwingungsdämpfung;

Fig. 2 eine Schemazeichnung des y-Schlittens mit z-Pinole, Taster und aktivem Tilger für eine Präzisions-Koordinaten Meßmaschine.

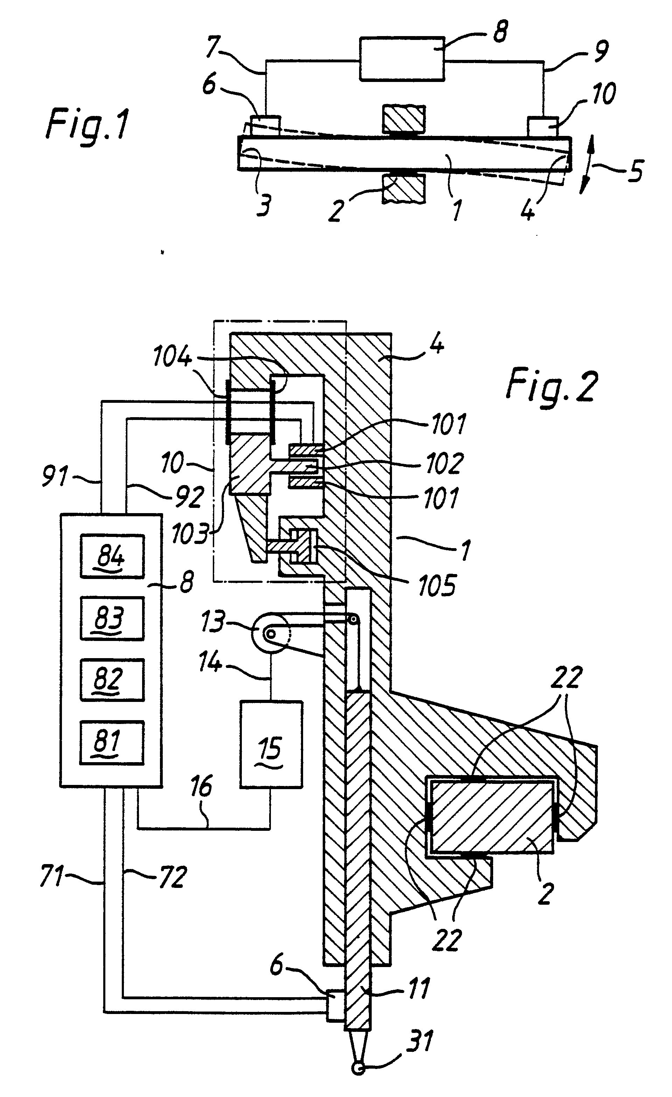

Fig. 1 zeigt einen Balken 1, der etwa in seiner Mitte an einer Einspannstelle in eine Halterung 2 eingespannt ist. Sein erstes Ende 3 und sein zweites Ende 4 werden durch eine Biegeschwingung 5 ausgelenkt, wenn der Balken 1 über die Halterung 2 beschleunigt, z.B. angestoßen, wird.

Ein Sensor 6 am ersten Ende 3 erfaßt die Bewegung des ersten Endes 3 und gibt über eine Signalleitung 7 ein Signal an die Regelelek tronik 8. Der Sensor 6 kann beispielsweise eine der Beschleunigung proportionale Spannung als Signal abgeben.

Die Regelelektronik 8 enthält eine Stromversorgungseinrichtung, einen Vorverstärker, einen Tiefpaß als Störfilter, eine Verzögerungseinrichtung zur Phasenanpassung und einen Endverstärker mit Amplitudenbegrenzer und wandelt das von dem Sensor 6 kommende Signal um in ein Steuersignal, das über die Signalleitung 9 auf den Aktuator 10 geleitet wird.

Der Aktuator 10 enthält einen Schwingungserzeuger. Dieser ist z.B. nach dem Prinzip eines Lautsprechers aufgebaut, bewegt statt der Membran aber einen schweren Ballast. Auch andere Linearantriebe sind möglich. Zusätzlich enthält der Aktuator 10 ein Dämpfungselement, insbesondere einen viskosen Dämpfer. Der Aktuator 10 ist nahe dem zweiten Ende 4 des Balkens 1 angebracht.

Durch Beschleunigung der Halterung 2, z.B. bei einem Stoß, wird eine Biegeschwingung 5 des Balkens 1 angeregt. Durch innere Reibung im Balken 1 ist die Schwingung gedämpft, die Abklingzeit ist jedoch unerwünscht groß. Der Aktuator 10 beaufschlagt dieses schwingende System mit einer äußeren Kraft, die über die Regelelektronik 8 von dem Sensor 6 geregelt wird. Diese äußere Kraft wird dabei so ausgelegt, daß sie als zusätzliche Dämpfung wirkt und weitgehend der aperiodische Grenzfall der Schwingung mit kürzester Abklingzeit erreicht wird. Dazu bewegt der Aktuator 10 den schweren Ballast in der Schwingungsrichtung des Balkens 1 mit dessen Schwingungsfrequenz, aber um 90° phasenverschoben. Ein Resonanzverhalten der Gesamtanordnung wird durch das Dämpfungselement im Aktuator 10 und eine geeignete Amplitudenbegrenzung für den Aktuator 10 durch die Regelelektronik 8 ausgeschlossen.

Durch eine einzelne derartige Einrichtung können nur die Schwingungsanteile des Balkens 1 in der Richtung, in der der Sensor 6 und der Aktuator 10 wirksam sind, gedämpft werden.

Im Bedarfsfall sind daher mehrere Einrichtungen mit unterschiedlich gerichteter Anordnung von Sensor 6 und Aktuatoren 10 vorzusehen, um verschiedene Schwingungsformen zu dämpfen. Dabei können beispielsweise auch Torsionsschwingungen von Antriebswellen mit einer derartigen Einrichtung gedämpft werden.

Eine konkrete Anwendung einer derartigen Einrichtung zur aktiven Schwingungsdämpfung wird anhand Fig. 2 erläutert.

Als y-Schlitten 1 einer Präzisions-Koordinaten-Meßmaschine ist hier der Balken 1 ausgeführt. Seine Länge ist veränderlich, da die integrierte z-Pinole 11 durch einen Antrieb 13 in Längsrichtung des Balkens 1 verstellbar ist. Die kürzeste Balkenlänge ist z.B. 4m und die größte 6,5m.

Bei kürzester Balkenlänge, d. h. z-Pinole 11 am oberen Anschlag, liegt die Halterung 2 etwa mittig zwischen dem zweiten Ende 4 und dem ersten Ende 3, das hier als Tastspitze 31 an der z-Pinole 11 ausgebildet ist. Der Abstand zwischen dem ersten Ende 3 und der Halterung 2 variiert also von ca. 2m bis 4,5m.

Die Halterung 2 ist als y-Führungstraverse 21 ausgebildet, gegen die der y-Schlitten durch Luft- oder Wälzlager 22 in y-Richtung verschiebbar allseits steif eingespannt ist.

Durch die Beschleunigungen beim Verschieben des y-Schlittens auf der y-Führungstraverse 21 wird dieser zu Schwingungen angeregt, insbesondere zu Kippschwingungen in y-Richtung um die Halterung 2 mit typischen Frequenzen von 10 bis 30 Hz und Amplituden an der Tastspitze 31 im Bereich von 30 μm. Dabei sind natürlich die konkreten Konstruktionsparameter und die momentane Position der z-Pinole 11, d. h. die Länge des Balkens 1, maßgeblich für die genauen Werte.

Da die erforderliche Meßgenauigkeit unter 1μm liegt, müssen diese Schwingungen im Zeitpunkt der Meßwertaufnahme der Präzisions- Koordinaten-Meßmaschine abgeklungen sein. Wegen der Abhängigkeit der Schwingung von der Position der z-Pinole 11 kann eine passive Schwingungsdämpfung nicht wirksam eingreifen.

Daher wird nahe der Tastspitze 31 im Abstand von ca. 10cm bis 30cm an der z-Pinole 11 ein Schwingungssensor 6 vorgesehen. Dazu ist beispielsweise ein Beschleunigungs-Sensor Q-Flex QA700 der Firma Sundstrand geeignet. Über Signalleitungen 71,72 ist der Sensor 6 mit einer Regelelektronik 8 verbunden. Diese besteht aus einem Vorverstärker 81, einem Tiefpaß 82 als Störfilter, einer Verzögerungseinrichtung 83 zur Phasenanpassung und einem Endverstärker 84 mit Amplitudenbegrenzung. Der Tiefpaß 82 filtert Störungen aus. Es kann sinnvoll sein, Verstärkung oder Frequenzgang der Regelelektronik 8 von der Balkenlänge, also der Stellung der z-Pinole 11 abhängig zu machen. Dazu kann die Regelelektronik 8 über eine Leitung 16 Steuersignale von einer z-Kontroll-Elektronik 15 erhalten, welche über eine Leitung 14 den Antrieb 13 der z-Pinole 11 steuert.

Über Leitungen 91,92 steuert die Regelelektronik 8 die Magnetspule 101 des Aktuators 10. Die Magnetspule 101 umgibt einen Fortsatz 102 aus magnetischem Material des Schwingkörpers 103 mit einer Masse von z.B. 10kg. Dieser ist mit einer Blattfeder-Parallelführung 104 im Bereich des zweiten Endes 4 des y-Schlittens 1 aufgehängt. Weiter ist der Schwingkörper 103 über einen viskosen Dämpfer 105 mit dem y-Schlitten 1 gekoppelt.

Gesteuert durch die Regelelektronik 8 erzeugt die Magnetspule 101 Schwingungen des Schwingkörpers 103 mit der Frequenz (10-30Hz) der Balkenschwingung, wie sie vom Sensor 6 erfaßt wird, und mit Amplituden bis zu ca. 1mm, d. h. wesentlich größer als die zu tilgende Auslenkung. Die zur Dämpfung der Schwingung des Schlittens 1 geeignete Phasenverschiebung von 90° wird durch eine geeignete zeitliche Verzögerung (83) zwischen dem Signal des Sensors 6 und den Ausgangssignalen der Regelelektronik 8 erreicht. Dabei ist auch die Phasenlage des Signals des Sensors 6 gegenüber der Schwingungsbewegung am Sensor 6 zu berücksichtigen.

Zur Vereinfachung der Darstellung ist in der Fig. 2 eine Anordnung von Sensor 6 und Aktuator 10 in x-Richtung senkrecht zur Verschiebungsrichtung y des y-Schlittens 1 gezeichnet. Zur Dämpfung der beschriebenen wichtigsten Schwingung, der Kippschwingung in y-Richtung, sind Sensor 6 und Aktuator 10 jedoch um 90° in y-Richtung verdreht anzuordnen.

Bei einer Präzisions-Koordinaten-Meßmaschine können auch mehrere Einrichtungen zur aktiven Schwingungsdämpfung für verschiedene Schwingungen eingesetzt werden.

Selbstverständlich ist der Einsatz nicht auf die dargestellte Ausführung mit vertikaler Pinole 11 (z-Richtung) beschränkt. In gleicher Weise kann auch die ebenfalls mögliche Ausführung einer Koordinaten-Meßmaschine mit horizontaler Pinole so gedämpft werden.

Die Erfindung findet auch außerhalb der Meßtechnik allgemeine Anwendungsmöglichkeiten, insbesondere in der Robotertechnik.

**Ansprüche**

1. Einrichtung zur aktiven Schwingungsdämpfung eines Objekts mit einem Schwingungssensor (6), einem Regelkreis (8) und einem Aktua-tor (10), **dadurch gekennzeichnet,** daß das Objekt ein an einer Einspannstelle fest eingespannter Balken (1) mit zwei freien Enden (3,4) ist, der Schwingungssensor (6) nahe dem ersten Balkenende (3) und der Aktuator (10) nahe dem zweiten Balkenende (4) angeordnet ist. (Fig. 1)

2. Einrichtung nach Anspruch 1, **dadurch gekennzeichnet,** daß der Balken (1) in seiner Länge derart gesteuert verstellbar ist, daß der Abstand des ersten Balkenendes (3) und zugleich des Schwingungssensors (6) zu der Einspannstelle verändert werden.

3. Präzisions-Koordinaten-Meßmaschine mit einem Tastkopf (31) an einer Pinole (11), die in einem Schlitten (1) längs verschiebbar angeordnet ist, wobei der Schlitten (1) mit Führungen (22) an ei-ner Traverse (21) gelagert ist, **dadurch gekennzeichnet,** daß die Pinole (11) nahe dem Tastkopf (31) einen Schwingungssensor (6) trägt, der Schlitten (1) auf der der Pinole (11) gegenüberliegenden Seite seiner Führungen (22) nahe seinem zweiten Ende (4) einen Aktuator (10) trägt und Schwingungssensor (6) und Aktuator (10) mit einem Regelkreis (8) zur aktiven Schwingungsdämpfung verbunden sind (Fig. 2).

4. Präzisions-Koordinaten-Meßmaschine nach Anspruch 3, **dadurch gekennzeichnet,** daß der Aktuator (10) ein elektromagnetischer Schwingungserzeuger (101) mit einem pendelnd aufgehängten (104) Schwingkörper (103) und einem viskosen Dämpfer (105) ist.

5. Präzisions-Koordinaten-Meßmaschine nach Anspruch 3, **dadurch gekennzeichnet,** daß eine Kontrolleinheit (15) für die Verschiebung der Pinole (11) vorgesehen ist und ein Signal (16), das von der Stellung der Pinole (11) abhängt, der Regelelektronik (8) zugeführt wird und deren Steuerkennlinie verändert.

Fig.1

Fig.2

## EINSCHLÄGIGE DOKUMENTE

EP 90105291.0

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>GB - A - 2 165 667</u><br>(UNIVERSITY OF SOUTH AMPTON)<br>  * Zusammenfassung; Seite 2, Zeile 33 - Seite 3, Zeile 16; Fig. 1-5 *<br>-- | 1,2 | G 05 D 19/00<br>B 25 J 13/00 |
| A | <u>DD - A1 - 261 859</u><br>(VEB CARL ZEISS JENA)<br>  * Seite 2; Fig. 1,2 *<br>-- | 1,2 | |
| D,A | SYMPOSION ROBOT CONTROL, 1988, Karlsruhe<br>H.B.KUNZE "Position Control of Industrial Robots-Impacts, Concepts and Results"<br>  * Page 86, lines 16-45; fig. 9 *<br>---- | 1,2 | |

RECHERCHIERTE
SACHGEBIETE (Int Cl⁵)

B 23 Q 17/00
B 25 J 13/00
G 01 B  5/00
G 01 D  5/00
G 05 D 19/00
F 16 F 15/00

Der vorliegende Recherchenbericht wurde für alle Patentansprüche erstellt.

| Recherchenort | Abschlußdatum der Recherche | Prüfer |
|---|---|---|
| WIEN | 27-06-1990 | BAUER |